# EUROPEAN PATENT SPECIFICATION

(11) **EP 2 516 846 B1**
(45) Date of publication and mention of the grant of the patent: **20.02.2019**
(21) Application number: 10796043.7
(22) Date of filing: 21.12.2010
(51) Int. Cl.: F03D 1/06

(54) **A REINFORCED HUB FOR A WIND TURBINE**
VERSTÄRKTE NABE FÜR EINE WINDTURBINE
MOYEU RENFORCÉ POUR UNE ÉOLIENNE

(30) Priority: 21.12.2009 DK 200970286; 21.12.2009 US 288623 P
(43) Date of publication of application: 31.10.2012
(73) Proprietor: Vestas Wind Systems A/S, 8200 Aarhus N (DK)
(72) Inventor: BECH, Anton, DK-6950 Ringkøbing (DK); BITSCH, Michael Lundgaard, DK-8860 Ulstrup (DK)
(74) Representative: Inspicos P/S
(86) International application number: PCT/EP2010/070388
(87) International publication number: WO 2011/076796

(56) References cited:
- EP-A2- 1 882 854

## Description

### FIELD OF THE INVENTION

The present invention relates to a hub for a wind turbine. The hub of the invention allows the size of the hub to be minimised without reducing the strength and stiffness in the regions near the blade flanges, and while maintaining a relatively low weight of the hub.

### BACKGROUND OF THE INVENTION

In the wind power industry there is a tendency to produce wind turbines of increasing size. Thereby the size of the individual parts of the wind turbines, such as the hub, also increases. It is therefore desirable to minimise the size of the hub. This may, e.g., be achieved by making the regions between the blade flanges as small or narrow as possible. However, this introduces the risk that the strength and stiffness of these parts of the hub become too low to withstand the loads occurring during operation of the wind turbine.

In order to increase the strength and stiffness of the regions between the blade flanges, the regions may be formed with a significant material thickness. However, this increases the weight of the hub.

US 6,942,461 discloses a rotor blade hub for a wind power installation. The rotor blade hub is divided into a hub core and a number of outer hub portions corresponding to the number of rotor blades. The outer hub portions are each connected to the hub core and to a rotor blade. In the hub core, the regions between the connecting portions towards the outer hub portions are relatively narrow. The sufficient strength and stiffness of the hub is provided by means of the outer hub portions. This significantly adds to the total weight of the hub.

Another prior art rotor blade hub is disclosed in EP1882854.

### DESCRIPTION OF THE INVENTION

It is an object of embodiments of the invention to provide a hub for a wind turbine, where the overall size and weight of the hub are minimised, while ensuring sufficient strength and stiffness of the hub.

According to a first aspect, the invention provides a hub for a wind turbine, the hub comprising a continuous shell forming an internal space within a hollow body, the hub further comprising a main shaft flange adapted to connect the hub to a main shaft and one or more blade flanges, each blade flange being adapted to connect the hub to a wind turbine blade, the hub comprising one or more reinforcement elements connected to the shell and extending from an inner surface of the shell and inwardly into the internal space within the hollow body.

In the present context the term 'wind turbine' should be interpreted to mean an apparatus which is capable of transforming energy of the wind into electrical energy, preferably to be supplied to a power grid. A set of wind turbine blades extract the energy from the wind, thereby causing a rotor to rotate. The rotational movements of the rotor are transferred to a generator, either directly via a stator part and a rotor part, or via a drive train, e.g. including a main shaft, a gear system and an input shaft for the generator.

The hub is the part of the wind turbine which carries the wind turbine blades. The hub rotates when the wind turbine blades extract energy from the wind. In the case that the wind turbine is of a kind comprising a drive train for transferring the rotational movements of the rotor to the generator, the hub may advantageously be connected to a main shaft in such a manner that rotational movements of the hub are transferred to rotational movements of the main shaft. In the hub of the present invention, the main shaft is connected to the hub via a main shaft flange on the hub and a corresponding flange on the main shaft. Similarly, the wind turbine blades are connected to the hub via respective blade flanges and corresponding flanges on the wind turbine blades, preferably via a pitch bearing.

It should be understood, that a hub comprising a continuous shell is a hub formed by a shell forming a single entity. The continuous shell may however comprise one or more apertures, such as openings for maintenance workers or other persons who have to access the hub during mounting hereof at a nacelle or during maintenance of the wind turbine.

The hub comprises one or more reinforcement elements connected to the shell and extending from an inner surface of the shell and inwardly into the internal space within the hollow body. In order to reduce the size and weight of a hub, it is desirable to make the region between the blade flanges and/or the main shaft flange as small or narrow as possible, and this introduces the risk that the strength and stiffness of these regions becomes too low to withstand the expected loads during operation. By arranging reinforcement elements at the inner surface of the shell, a low size and a low weight of the hub can be achieved without compromising the strength and stiffness of the hub.

Thus, in the hub according to the first aspect of the invention, additional strength and stiffness is provided to the hub, without increasing the weight hereof excessively, and while maintaining small or narrow regions between the flanges. Thus the size and weight of the hub are minimised without compromising the strength and stiffness, in particular the torsional stiffness, of the hub.

At least one reinforcement element may form an inner wall within the hollow body at a distance to the continuous shell, thereby forming a cavity between the inner wall and the continuous shell. Thereby the inner wall and the continuous shell in combination may provide the sufficient strength and stiffness to the regions between the blade flanges and/or main flange. The cavity ensures that the strength and stiffness is obtained without increasing the weight of the hub excessively. The inner wall and the continuous shell may form a tubular element. Such an element is known to have a stiffness which is almost as high as a solid object with the same outer dimensions. However, the weight is significantly reduced due to the cavity inside the element.

The hub may be casted from a castable material, and in one embodiment the inner wall and the continuous shell may be cast in one piece so that the inner wall forms an integral part of the hub. According to this embodiment, the inner wall is casted directly along with the rest of the hub. The casting material may be a cast metal, such as cast iron, e.g. Spheroidal Ductile Cast Iron, EN-GJS-400-18, or any other suitable kind of cast metal.

As an alternative, the inner wall may be a separate part being attached to the hub. According to this embodiment, the inner wall is manufactured separately, and subsequently attached to the hub in a desired position. The inner wall may be attached by means of reversible connecting means, such as bolt connections. As an alternative, the inner wall may be attached using irreversible connecting means, such as welding. In some cases it may be difficult to provide a casting mould which allows an inner wall and a cavity to be formed directly during casting of the hub. In these cases it is an advantage to manufacture the inner wall separately and subsequently attach the inner wall to the hub.

At least one reinforcement element may form a rib extending from the inner surface of the continuous shell and forming a free edge terminating the rib within the internal space. The rib(s) may, e.g., be formed by adding material at or near the blade flanges and/or the main shaft flange, in particular in the regions between the flanges. As an alternative, the ribs may be formed by casting the regions at or near the flanges with a relatively high wall thickness, and subsequently removing some of the wall material. In any event, the rib(s) provides stiffness and strength to the regions at or near the flanges without excessively increasing the weight of the hub, similarly to the situation described above with reference to the inner wall.

At least one reinforcement element may be arranged in a region between two blade flanges. As described above, it is sometimes desirable to make the regions between the blade flanges small or narrow, and it is therefore often desirable to provide reinforcement elements in these regions.

The hub may comprise at least two hub parts, each hub part being connected to at least one other hub part via one or more connecting portions.

According to this embodiment, the hub is divided into a number of smaller parts which are manufactured separately and subsequently assembled to form the hub. Since the hub parts are smaller than the resulting hub, they are much easier to handle during manufacture and transport, than would be the case if the hub was manufactured in a single piece.

The hub parts are connected to each other via one or more connecting portions. The connecting portions are matching interfaces formed on the hub parts to allow a suitable connection between the hub parts, thereby forming the hub. The connecting portions may, e.g., comprise flanges or flange like portions.

The connecting portion(s) intersect(s) at least one blade flange and/or the main shaft flange, i.e. at least one blade flange and/or the main shaft flange comprise(s) a section forming part of or being attached to one of the hub parts and a section forming part of or being attached to another hub part. According to this embodiment, at least one of the flanges is formed from portions forming part of or being attached to at least two different hub parts. Accordingly, the hub is divided in such a manner that there is no 'core portion' with a large internal volume, when the hub is not assembled. Thereby it is ensured that the hub parts have manageable sizes, and that they are easy to handle, e.g. during manufacture and transport.

When assembled, the hub comprises a continuous shell forming a hollow body, the hollow body being assembled from at least two hub parts connected to each other via one or more connection portions. It should be understood, that a hub comprising a continuous shell is a hub formed by a shell which when assembled forms a single entity, i.e. the at least two hub parts are not movable relative to each other when assembled, except for deformations during use.

As the flanges may be separate parts being attached to the hub, the blade flange and/or the main shaft flange may comprise a section being attached to one of the hub parts and a section being attached to another hub part.

Alternatively, the flanges may form part of the hub, and thus at least one blade flange and/or the main shaft flange comprises a section forming part of one of the hub parts and a section forming part of another hub part.

The hub may comprise two hub parts, and at least one blade flange may comprise a section forming part of or being attached to one of the hub parts and a section forming part of or being attached to another hub part. According to this embodiment, the hub preferably comprises a rear part having the main shaft flange formed completely therein and a front part arranged opposite to the rear part. In a similar embodiment, the rear part and/or the front part may be formed by a number of hub parts, e.g. arranged circumferentially about a rotational axis for the hub. In this case, the rear part may, e.g., be formed from a single hub part, thereby avoiding dividing the main shaft flange, and the front part may be formed from a number of hub parts, e.g. two or three, thereby reducing the size of the individual hub parts used for this part of the hub.

As an alternative, the number of hub parts may be equal to the number of blade flanges, and the main shaft flange may comprise a section forming part of or being attached to one of the hub parts and a section forming part of or being attached to another hub part. According to this embodiment, the hub parts are preferably arranged circumferentially with respect to a rotational axis of the hub. The hub parts may advantageously be substantially identical in size and shape and they may be arranged substantially symmetrically with respect to the wind turbine blades. In a similar embodiment, one or more of the hub parts may be formed from two or more hub parts, e.g. a rear part and a front part.

In the embodiment described above, at least one blade flange may further comprise a section forming part of or being attached to one of the hub parts and a section forming part of or being attached to another hub part. In this case the parts of the hub which are arranged between the blade flanges are preferably each contained in a single hub part. Thereby the strength of these parts is not compromised by connections between hub parts.

As an alternative, the connecting portion(s) may further extend between two blade flanges. In this case, the blade flanges are preferably each contained in a single hub part. Thereby the strength of the blade flanges is not compromised by connections between hub parts.

As yet another alternative, some connecting portions may intersect blade flanges, thereby forming blade flanges which comprise a section forming part of or being attached to one of the hub parts and a section forming part of or being attached to another hub part, while other connecting portions may extend between the blade flanges. In this case the number of hub parts may advantageously be twice the number of blade flanges.

At least one connecting portion may intersect at least one of the reinforcement elements, such as an inner wall, i.e. at least one reinforcement element may comprise a section forming part of or being attached to one of the hub parts and a section forming part of or being attached to another hub part. According to this embodiment, at least one inner wall is divided into at least two sub-parts, i.e. the inner wall comprises portions forming part of or being attached to at least two different hub parts. As an alternative, one or more ribs may be divided into two sub-parts, each being arranged on or forming part of a separate hub part.

To further reinforce the hub at the blade flanges, the hub may further comprises at least one blade flange reinforcement elements arranged at the blade flange(s) and extending primarily within the opening delimited by the flange(s), e.g. substantially in the plane defined by the flange(s). In one embodiment, a blade reinforcement element may be arranged at each of the blade flanges.

The blade flange reinforcement element may comprise a circular plate element which may be of a size corresponding to the size of the blade flanges, thereby providing a more rigid construction of the hub. The circular plate element may be a solid plate or may be a plate having openings, such as an opening allowing a person to access the hollow body of the shell. The opening may e.g. be off-set from the centre of the plate element, e.g. for allowing more easy access from the edge of the flange. This is particularly relevant for large wind turbines where the flange(s) can be several metres in diameter.

The blade flange reinforcement element may alternatively comprise a number of braces or rod shaped elements extending between points on the periphery of the flange(s).

As an alternative or as a supplement to the blade flange reinforcement elements described above, the blade flange reinforcement element may comprise a ring shaped element. The ring shaped element may be of a size corresponding to the size of the blade flange and may be positioned on top of the blade flange, thereby providing a more rigid blade flange with a higher strength. A similar ring shaped reinforcement element may also be used to reinforce the main shaft flange.

To facilitate transportation of the ring shaped element it may comprise at least two ring parts, such a two halves, four quarters, or another number of parts which form a ring when positioned with respective end portions abutting each other. If the hub is assembled from hub parts, it may be an advantage if the ring parts are positioned so that at least some of their end portions when abutting each other, i.e. the abutting joints between the ring parts, may be positioned displaced relative to the connecting portion(s), thereby increasing the strength of the connecting portion(s).

According to a second aspect the invention provides a wind turbine comprising a hub according to the first aspect of the invention.

It should be understood, that the above-mentioned features of the first aspect of the invention may also be applicable in relation to the wind turbine according to the second aspect of the invention. Thus, the second aspect may comprise any combination of features and elements of the first aspect of the invention.

### BRIEF DESCRIPTION OF THE DRAWINGS

The invention will now be described in further detail with reference to the accompanying drawings in which
Figs. 1 and 2 are perspective views of a hub according to a first embodiment of the invention,
Figs. 3 and 4 are exploded views of a hub according to a second embodiment of the invention, and
Figs. 5 and 6 are perspective views of a hub according to a third embodiment of the invention.

### DETAILED DESCRIPTION OF THE DRAWINGS

It should be understood that the detailed description and specific examples, while indicating embodiments of the invention, are given by way of illustration only, since various changes and modifications within the spirit and scope of the invention will become apparent to those skilled in the art from this detailed description.

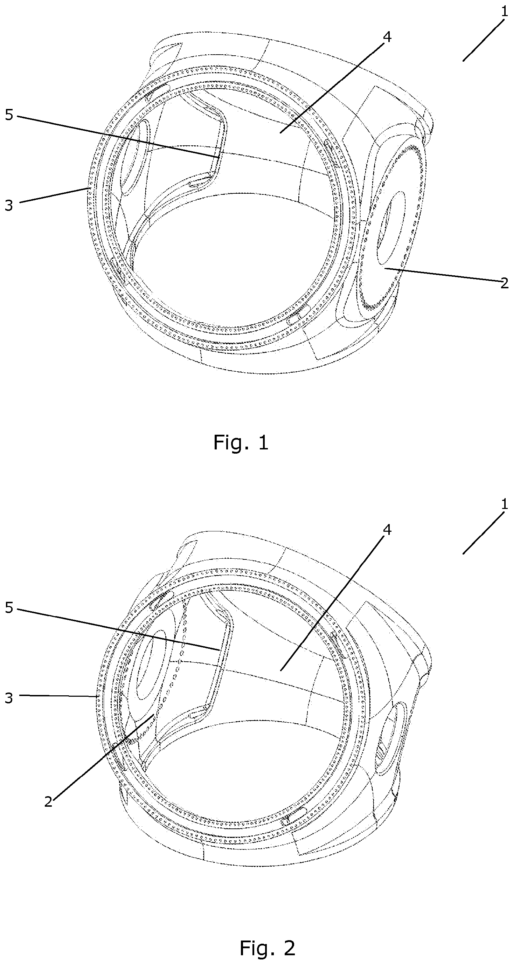

Figs. 1 and 2 are perspective views of a hub 1 according to a first embodiment of the invention, seen from two different angles. In the embodiment of Figs. 1 and 2, the hub 1 is manufactured in a single piece. The hub 1 comprises a main shaft flange 2 being adapted to be connected to a main shaft, and three blade flanges 3, each being adapted to have a wind turbine blade connected thereto, via a pitch bearing.

In the regions between the blade flanges 3, the hub 1 is provided with reinforcement elements in the form of inner walls 4 arranged at a distance to the continuous shell of the hub 1, in such a manner that cavities 5 are formed between the inner walls 4 and the continuous shell, i.e. reinforcement elements having a tubular shape are formed by the inner walls 4 and the continuous shell. The inner walls 4 provide additional strength and stiffness in the regions between the blade flanges 3. The cavities 5 ensure that the additional strength and stiffness is obtained without increasing the weight of the hub 1 excessively.

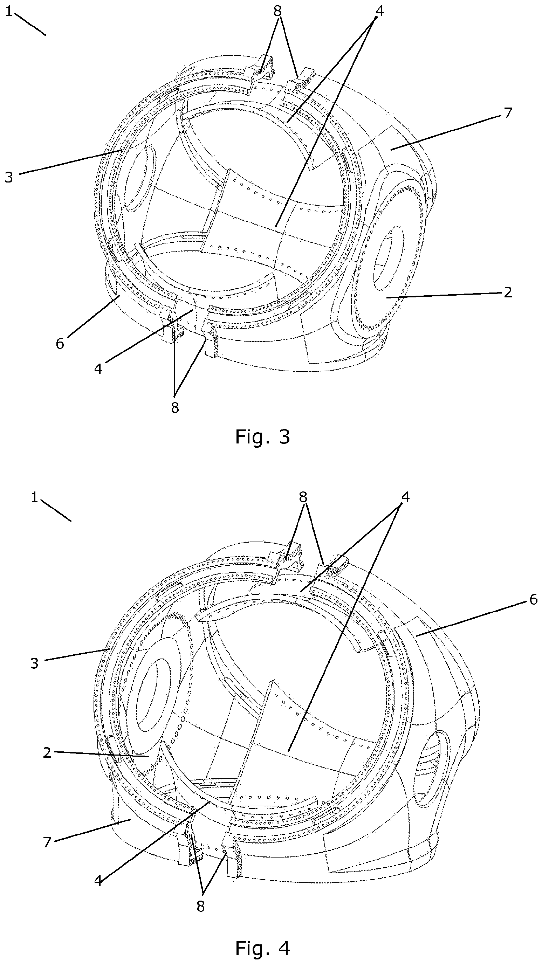

Figs. 3 and 4 are exploded views of a hub 1 according to a second embodiment of the invention, seen from two different angles. The hub 1 of Figs. 3 and 4 is divided into a front hub part 6 and a rear hub part 7, the rear hub part 7 having the main flange 2 formed therein.

The front hub part 6 and the rear hub part 7 are each provided with three connecting portions 8. The connecting portions 8 are arranged in the regions between the blade flanges 3, and they intersect the blade flanges 3, i.e. each blade flange 3 comprises a portion which forms part of the front hub part 6 and a portion which forms part of the rear hub part 7.

The hub parts 6, 7 are manufactured separately using a casting technique. Thereby, the size of each piece being casted is approximately half the size of the entire hub 1. This makes it much easier to handle the hub 1 during the casting process. The hub parts 6, 7 are subsequently assembled by connecting the connecting portions 8 to each other in the positions shown in Figs. 3 and 4. This may, e.g., be done by bolting the connecting portions 8 to each other, or by welding them together.

The hub 1 of Figs. 3 and 4 is further provided with inner walls 4 arranged in the regions between the blade flanges 3, similarly to the embodiment shown in Figs. 1 and 2. However, in the embodiment shown in Figs. 3 and 4, the inner walls 4 are in the form of separate parts, which are attached to the hub 1 in the regions between the blade flanges 3, after the front hub part 6 and the rear hub part 7 have been assembled via the connecting portions 8. The inner walls 4 may be attached to the hub 1 by means of bolt connections or other suitable reversible connecting means. As an alternative, the inner walls 4 may be attached to the hub 1 in a permanent manner, e.g. using a welding technique.

When the inner walls 4 are attached to the hub 1, cavities are formed between the inner walls 4 and the continuous shell in the regions between the blade flanges 3. Thereby the strength and stiffness of the regions between the blade flanges 3 are increased without significantly increasing the weight of the hub 1, i.e. the advantages described above with reference to Figs. 1 and 2 are obtained.

One advantage of providing the inner walls 4 in the form of separately manufactured parts, rather than casting them directly with the hub 1 or the hub parts 6, 7, is that in some cases it is easier to separately manufacture and subsequently attach the inner walls 4 to the hub 1 than it is to form the casting mould in a manner which allows the inner walls 4 to be casted directly with the hub 1 or the hub parts 6, 7.

The separate inner walls 4 illustrated in Figs. 3 and 4 are very suitable for use in a hub 1 which is manufactured in a single piece, like the one shown in Figs. 1 and 2, since it may, in this case, be very difficult to cast the inner walls 4 directly along with the hub 1. Thus, the hub 1 illustrated in Figs. 1 and 2 could, alternatively, be provided with separate inner walls 4 as the ones illustrated in Figs. 3 and 4. Similarly, the divided hub 1 illustrated in Figs. 3 and 4 could, alternatively, be provided with inner walls 4 which are casted directly with the front hub part 6 and the rear hub part 7, respectively, in such a manner that substantially continuous inner walls 4 are formed in the regions between the blade flanges 3 when the front hub part 6 and the rear hub part 7 are assembled via the connecting portions 8.

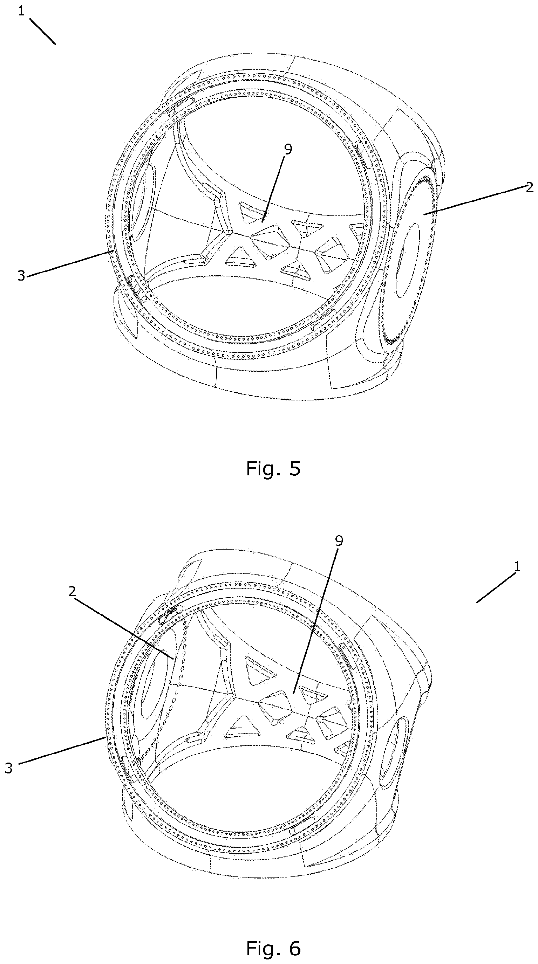

Figs. 5 and 6 are perspective views of a hub 1 according to a third embodiment of the invention, seen from two different angles. The hub 1 of Figs. 5 and 6 is also provided with a main shaft flange 2 and three blade flanges 3, similarly to the embodiments shown in Figs. 1-4. The hub of Figs. 5 and 6 is manufactured in a single piece.

In the regions between the blade flanges 3, the hub 1 is provided with reinforcement elements in the form of ribs 9. The ribs 9 provide additional strength and stiffness to the regions between the blade flanges 3, thereby allowing these regions to be small or narrow, thereby allowing the size of the hub 1 to be minimised. Since the reinforcement elements are in the form of ribs 9, rather than being in the form of an increase in the thickness of the continuous shell in the regions between the blade flanges 3, the additional strength and stiffness are obtained without a significant increase in the weight of the hub 1. Thus, the ribs 9 function in a manner which is similar to the inner walls 4 shown in Figs. 1-4.

The ribs 9 could be formed by casting the ribs 9 directly along with the hub 1, i.e. by adding material to the continuous shell in the positions of the ribs 9. Alternatively, the continuous shell may be casted with a thickness corresponding to the thickness of the ribs 9, and material may subsequently be removed in order to form the ribs 9.

## Claims

1. A hub (1) for a wind turbine, the hub (1) comprising a continuous shell forming an internal space within a hollow body, the hub (1) further comprising a main shaft flange (2) adapted to connect the hub (1) to a main shaft and one or more blade flanges (3), each blade flange (3) being adapted to connect the hub (1) to a wind turbine blade, the hub (1) comprising one or more reinforcement elements (4, 9) connected to the shell and extending from an inner surface of the shell and inwardly into the internal space within the hollow body, wherein at least one reinforcement element forms an inner wall (4) within the hollow body at a distance to the continuous shell, thereby forming a cavity (5) between the inner wall (4) and the continuous shell,
wherein the hub comprises at least two hub parts (6, 7), each hub part (6, 7) is connected to at least one other hub part (6, 7) via one or more connecting portions (8), so that at least one blade flange (3) and/or the main shaft flange (2) comprises a section forming part of or being attached to one of the hub parts (6, 7) and a section forming part of or being attached to another hub part (6, 7),
wherein the inner wall (4) and the hub parts (6, 7) are casted from a castable material in one piece
**characterised in that** the connecting portion(s) (8) intersect(s) at least one blade flange (3) and/or the main blade shaft flange (2).

2. A hub (1) according to claim 1, wherein at least one reinforcement element forms a rib (9) extending from the inner surface of the continuous shell and forming a free edge terminating the rib (9) within the internal space.

3. A hub (1) according to any of the preceding claims, wherein at least one reinforcement element (4, 9) is arranged in a region between two blade flanges.

4. A hub (1) according to any of the preceding claims, wherein at least one of the reinforcement elements (4, 9) comprises a section forming part of or being attached to one of the hub parts (6, 7) and a section forming part of or being attached to another hub part (6, 7).

5. A wind turbine comprising a hub (1) according to any of the preceding claims.

## Patentansprüche

1. Nabe (1) für eine Windturbine, wobei die Nabe (1) eine kontinuierliche Schale umfasst, die einen internen Raum innerhalb eines hohlen Körpers bildet, wobei die Nabe (1) weiter einen Hauptantriebswellenflansch (2) umfasst, der angepasst ist, um die Nabe (1) mit einer Hauptantriebswelle und einem oder mehreren Blattflanschen (3) zu verbinden, wobei jeder Blattflansch (3) angepasst ist, um die Nabe (1) mit einem Windturbinenblatt zu verbinden, wobei die Nabe (1) ein oder mehrere Verstärkungselemente (4, 9) umfasst, die mit der Schale verbunden sind und sich von einer Innenfläche der Schale und nach innen in den internen Raum innerhalb des hohlen Körpers erstrecken, wobei zumindest ein Verstärkungselement eine Innenwand (4) innerhalb des hohlen Körpers in einem Abstand zu der kontinuierlichen Schale bildet, wodurch ein Hohlraum (5) zwischen der Innenwand (4) und der kontinuierlichen Schale gebildet wird,
wobei die Nabe zumindest zwei Nabenteile (6, 7) umfasst, wobei jeder Nabenteil (6, 7) mit zumindest einem anderen Nabenteil (6, 7) über einen oder mehrere Verbindungsabschnitte (8) verbunden ist, sodass zumindest ein Blattflansch (3) und/oder der Hauptantriebswellenflansch (2) einen Bereich, der einen Teil von einem der Nabenteile (6, 7) bildet oder an diesem befestigt ist, und einen Bereich, der einen Teil eines anderen Nabenteils (6, 7) bildet oder an diesem befestigt ist, umfasst,
wobei die Innenwand (4) und die Nabenteile (6, 7) aus einem gießbaren Material in einem Stück gegossen sind,
**dadurch gekennzeichnet, dass** der (die) Verbindungsabschnitt(e) (8) zumindest einen Blattflansch (3) und/oder den Hauptblattantriebswellenflansch (2) schneiden.

2. Nabe (1) nach Anspruch 1, wobei zumindest ein Verstärkungselement eine Rippe (9) bildet, die sich von der Innenfläche der kontinuierlichen Schale erstreckt und eine freie Kante bildet, die die Rippe (9) innerhalb des internen Raums abschließt.

3. Nabe (1) nach einem der vorstehenden Ansprüche, wobei das zumindest eine Verstärkungselement (4, 9) in einer Region zwischen zwei Blattflanschen angeordnet ist.

4. Nabe (1) nach einem der vorstehenden Ansprüche, wobei zumindest eins der Verstärkungselemente (4, 9) einen Bereich, der einen Teil von einem der Nabenteile (6, 7) bildet oder an diesem befestigt ist, und einen Bereich, der einen Teil eines anderen Nabenteils (6, 7) bildet oder an diesem befestigt ist, umfasst.

5. Windturbine, umfassend eine Nabe (1) nach einem der vorstehenden Ansprüche.

## Revendications

1. Moyeu (1) pour une éolienne, le moyeu (1) comprenant une coque continue formant un espace interne à l'intérieur d'un corps creux, le moyeu (1) comprenant en outre une bride d'arbre principal (2) conçue pour relier le moyeu (1) à un arbre principal et une ou plusieurs brides de pale (3), chaque bride de pale (3) étant conçue pour relier le moyeu (1) à une pale d'éolienne, le moyeu (1) comprenant un ou plusieurs éléments de renfort (4, 9) reliés à la coque s'étendant à partir d'une surface intérieure de la coque et intérieurement dans l'espace interne à l'intérieur du corps creux, dans lequel au moins un élément de renfort forme une paroi intérieure (4) à l'intérieur du corps creux à une certaine distance de la coque continue, formant de ce fait une cavité (5) entre la paroi intérieure (4) et la coque continue,
dans lequel le moyeu comprend au moins deux parties de moyeu (6, 7), chaque partie de moyeu (6, 7) est reliée à au moins une autre partie de moyeu (6, 7) via une ou plusieurs portions de connexion (8), de sorte qu'au moins une bride de pale (3) et/ou la bride d'arbre principal (2) comprend une section formant une partie de ou étant attachée à une des parties de moyeu (6, 7) et une section formant une partie de ou étant attachée à une autre partie de moyeu (6, 7),
dans lequel la paroi intérieure (4) et les parties de moyeu (6, 7) sont coulées à partir d'une matière pouvant être coulée en une seule pièce
**caractérisé en ce que** la ou les portion(s) de connexion (8) croise(nt) au moins une bride de pale (3) et/ou la bride d'arbre de pale principal (2).

2. Moyeu (1) selon la revendication 1, dans lequel au moins un élément de renfort forme une nervure (9) s'étendant à partir de la surface intérieure de la coque continue et formant un bord libre terminant la nervure (9) dans l'espace interne.

3. Moyeu (1) selon l'une quelconque des revendications précédentes, dans lequel au moins un élément de renfort (4, 9) est agencé dans une région entre deux brides de pale.

4. Moyeu (1) selon l'une quelconque des revendications précédentes, dans lequel au moins un des éléments de renfort (4, 9) comprend une section formant une partie de ou étant attachée à une des parties de moyeu (6, 7) et une section formant une partie ou étant attachée à une autre partie de moyeu (6, 7).

5. Éolienne comprenant un moyeu (1) selon l'une quelconque des revendications précédentes.
